# EUROPEAN PATENT APPLICATION

(11) **EP 3 246 299 A1**
(43) Date of publication of application: **22.11.2017**
(21) Application number: 16305586.6
(22) Date of filing: 20.05.2016
(51) Int. Cl.: C04B 28/04, C04B 14/10, C04B 24/32, C09K 8/467, C09K 8/487, C09K 8/18

(54) **COMPOSITIONS AND METHODS FOR ADJUSTING THE RHEOLOGICAL PROPERTIES OF WELL SERVICE FLUIDS**

(71) Applicant: Services Pétroliers Schlumberger, 75007 Paris (FR); Schlumberger Technology B.V., 2514 JG The Hague (NL)
(72) Inventor: Carelli, Clara, 75014 Paris (FR); Le Roy-Delage, Sylvaine, 75015 Paris (FR)
(74) Representative: Osha Liang

(57) **Abstract**

Well service compositions contain water, a hydratable clay mineral and an ether based additive. The compositions may further comprise portland cement. The hydratable clay mineral may be untreated bentonite, an ether modified bentonite, hectorite or sepiolite or a combination thereof. The ether based additive may be a polyether such as polypropylene glycol or an ether modified silicone. The presence of the ether based additive improves the mixability and the rheological properties of the compositions.

## Description

### BACKGROUND

The statements in this section merely provide background information related to the present disclosure and may not constitute prior art.

This disclosure relates to methods for modifying the rheological properties of well service fluids that contain clay minerals such as bentonite and sepiolite.

Well service fluids, particularly drilling fluids and cement slurries, may contain bentonite. Bentonite is an absorbent aluminum phyllosilicate clay that is mainly composed of montmorillonite (also referred to as smectite). Bentonite expands upon hydration in water, absorbing several times its dry mass in water, and resulting in higher fluid viscosity, gel strength and solids suspending ability. Bentonite is obtained primarily from mines in Wyoming and South Dakota.

In aqueous drilling fluids, bentonite imparts thixotropy, increasing the fluid's ability to suspend and transport drill cuttings to the surface during circulation. During drilling the bentonite particles may also congregate along the formation wall, providing fluid loss control.

In cement slurries, bentonite is used as an extender. Extenders may increase cement slurry yield, reducing the amount of cement required to produce a given volume of set product. This results in greater economy. Extenders may also reduce the slurry density, helping to prevent lost circulation. In addition, the number of stages required to cement a well may be reduced. Bentonite may also reduce fluid loss and improve cement slurry stability. For this application, cement slurries are considered to be stable when there is little to no solids segregation in the slurry at rest.

For well service fluids, bentonite is selected that conforms to the American Petroleum Institute specifications (API Specification 13A-Specification for Drilling Fluids Materials, 18th Edition, 2010). For cement slurries, API specifications further require that the bentonite be untreated (i.e., no functional groups such as polypeptides may be incorporated into the clay).

Bentonite may be added to cement slurries at concentrations up to 20% by weight of cement (BWOC). Above 6%, a dispersant is frequently added to reduce the slurry viscosity and gel strength. The API recommends that 5.3% additional water (BWOC) be added for each 1% bentonite; however, testing should be performed to determine the optimal water content with a particular cement.

For additional information concerning the roles of bentonite in drilling fluids and cement slurries: Zamora M and Stephens M: "Drilling Fluids," in Economides MJ, Watters LT and Dunn-Norman S (eds.): Petroleum Well Construction, John Wiley & Sons, Chichester (1998) 119-142. Nelson EB, Michaux M and Drochon B: "Cement Additives and Mechanisms of Action," in Nelson EB and Guillot D (eds.): Well Cementing - 2nd Edition, Schlumberger, Houston (2006) 49-91.

Well service fluids containing bentonite may be difficult to prepare at the wellsite, particularly during a continuous mixing process. The instantaneous water demand arising from bentonite hydration, as well as the wetting of other solids in the fluid, may lead to the formation of clumps in the mixing tank or, in some cases, failure of the mixing system. Suboptimal bentonite hydration may also prevent the well service fluid from achieving the desired rheological properties. The risk of such occurrences is particularly high when the solids mixture contains hydrophobic particles such as ground rubber.

### SUMMARY

The present disclosure describes improved compositions and methods for drilling and well cementing in which ether-based additives are employed to improve the mixability and adjust the rheological properties of well service fluids that contain a hydratable clay mineral, such as, for example, bentonite.

In an aspect, embodiments relate to compositions. The compositions comprise water, a hydratable clay mineral and an ether-based additive.

In a further aspect, embodiments relate to methods for cementing a subterreanean well. A composition is provided that comprises water, portland cement, a hydratable clay mineral and an ether-based additive. The composition is then placed into the well. During preparation of the composition, the ether-based additive is combined with the water before introducing the hydratable clay.

In yet a further aspect, embodiments relate to methods for treating a subterranean well. A composition is provided that comprises water, portland cement, a hydratable clay mineral and an ether-based additive. The composition is then placed into the well. During preparation of the composition, the ether-based additive is combined with the water before introducing the hydratable clay mineral.

In yet a further aspect, embodiments relate to methods for preparing a well-service fluid. Water and an ether-based additive are placed into a mixing system. Solids are then added to the mixing system, wherein the solids comprise a hydratable clay mineral.

This summary is provided to introduce a selection of concepts that are further described below in the detailed description. This summary is not intended to identify key features of the claimed subject matter, nor is it intended to be used as an aid in limiting the scope of the claimed subject matter.

### BRIEF DESCRIPTION OF THE DRAWINGS

Fig. 1 shows the rheological properties of bentonite suspensions with and without polypropylene glycol (PPG) at room temperature.
Fig. 2 shows the effect of the order of PPG addition on the rheological properties of bentonite suspensions.
Fig. 3 shows the effect of temperature on the rheological properties of bentonite suspensions.
Fig. 4 shows the effect of temperature on the rheological properties of bentonite suspensions that contain PPG.
Fig. 5 shows the effect of an unmodified silicone antifoam agent (SiA) on the rheological properties of bentonite suspensions at room temperature, 60°C and 80°C.
Fig. 6 shows the effect of PPG, an ether modified silicone and an unmodified silicone antifoam agent on the rheological properties of bentonite suspensions at room temperature.
Fig. 7 shows the effect of PPG, an ether modified silicone and an unmodified silicone antifoam agent on the rheological properties of bentonite suspensions at 80°C
Fig. 8 shows the effect of PPG molecular weight on the rheological properties of bentonite suspensions at room temperature.
Fig. 9 shows the effect of PPG molecular weight on the rheological properties of bentonite suspensions at 60°C.
Fig. 10 shows the effect of PPG molecular weight on the rheological properties of bentonite suspensions at 80°C.
Fig. 11 shows the effect of PPG and an ether modified silicone on the rheological properties of sepiolite suspensions at room temperature.
Fig. 12 shows the effect of PPG and an ether modified silicone on the rheological properties of sepiolite suspensions at 60°C.
Fig. 13 shows the effect of PPG and an ether modified silicone on the rheological properties of sepiolite suspensions 80°C.
Fig. 14 shows the rheological properties of ether modified bentonite suspensions at room temperature, 60°C and 80°C.
Fig. 15 shows the effect of an ether modified silicone on the rheological properties of bentonitic cement slurries.
Fig. 16 shows the effect of PPG on the rheological properties of bentonitic cement slurries at room temperature.
Fig. 17 shows the effect of PPG on the rheological properties of bentonitic cement slurries at 85°C.

### DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. The term about should be understood as any amount or range within 10% of the recited amount or range (for example, a range from about 1 to about 10 encompasses a range from 0.9 to 11). Also, in the summary and this detailed description, it should be understood that a concentration range listed or described as being useful, suitable, or the like, is intended that any concentration within the range, including the end points, is to be considered as having been stated. For example, "a range of from 1 to 10" is to be read as indicating each possible number along the continuum between about 1 and about 10. Furthermore, one or more of the data points in the present examples may be combined together, or may be combined with one of the data points in the specification to create a range, and thus include each possible value or number within this range. Thus, even if specific data points within the range, or even no data points within the range, are explicitly identified or refer to a few specific, it is to be understood that inventors appreciate and understand that any data points within the range are to be considered to have been specified, and that inventors possessed knowledge of the entire range and the points within the range.

Mixability and rheological properties of well service fluids may be improved by the incorporation of various ether based additives at concentrations that are outside of the ranges within which they are commonly used as antifoam agents.

The use of the ether based additives is particularly useful when preparing fluids whose solid volume fractions (SVFs) exceed about 0.50, and whose compositions contain hydratable clays. Such fluids may fall into the category known in the art as "engineered particle size" systems. Such systems have multimodal particle-size distributions that allow maximizing the SVF while maintaining fluid pumpability and achieving low permeability. A complete discussion concerning engineered particle size systems may be found in the following publication. Nelson EB, Drochon B, Michaux M and Griffin TJ: "Special Cement Systems," in Nelson EB and Guillot D (eds.): Well Cementing - 2nd Edition, Schlumberger, Houston (2006) 233-268.

Engineered particle size systems may contain very fine particles that have sizes in the range of 1 micrometer or less. Such particles may be composed of cement kiln dust, silica fume, micronized barite, micronized hausmannite, micronized hematite and micronized ilmenite. Such materials have high surface areas that should quickly become wet during mixing operations at the wellsite; otherwise, the desired fluid properties may not be achieved.

Furthermore, certain engineered particle size systems are designed to be more flexible than conventional cement designs (i.e., have a low Young's modulus below about 6,000 MPa), or to be self-repairing should cracks or fissures develop in the cement sheath during the well's lifetime. Such systems may contain hydrophobic particles in the form of plastics or elastomers. Such hydrophobic materials may include natural rubber, nitrile rubber, styrene-butadiene rubber, styrene-isoprene-styrene rubber, polymers or copolymers containing ethylene or propylene, butyl (isobutene isoprene rubber, hydrogenated nitrile butadiene rubber, or acrylonitrile-butadiene copolymer or combinations thereof.

For each aspect, the water may comprise fresh water, seawater, produced water or brines.

For each aspect, the hydratable clay mineral may comprise untreated bentonite, ether modified bentonite, hectorite or sepiolite or combinations thereof. As discussed earlier, bentonite is an absorbent aluminum phyllosilicate clay that is mainly composed of montmorillonite (also referred to as smectite). The general chemical formula is Al₂O₃•4SiO₂•H₂O. Ether modified bentonites are exemplified by the proprietary commercial product Agogel™ M610 (available from CHT Bezema, Tübingen, Germany). Hectorite is also a member of the montmorillonite group, and is especially rich in magnesium and lithium. The empirical chemical formula is Na_{0.3}(Mg, Li)₃Si₄O₁₀(OH)₂. Sepiolite is a magnesium silicate clay with the typical chemical formula Mg₄Si₆O₁₅(OH). The hydratable clay mineral may be present at a concentration between 0.5% and 10.0% by weight of water, or between 1.0% and 8.0% by weight of water or between 3.0% and 6.0% by weight of water. In cement slurries, the hydratable clay mineral concentration may be between 0.1% and 6.0% by weight of cement, or between 0.1% and 3.0% by weight of cement or between 0.1% and 1.5% by weight of cement.

For each aspect, the ether-based additive may comprise a polyether, or an ether-modified silicone or a combination thereof. Examples of suitable polyethers include paraformaldehyde, polyethylene glycol (PEG), polypropylene glycol (PPG), polytetramethylene glycol (PTMG) or polytetramethylene ether glycol (PTMEG) or combination thereof. The polyether may comprise PPG. The PPG may have an average molecular weight between 1,000 g/mol and 4,000 g/mol, or between 2,000 g/mol and 4,000 g/mol. Throughout this application it is to be understood that cited PPG molecular weights are average molecular weights.

For each aspect, the polyether may be present in the composition at a concentration between 1.7% and 10.2% by weight of water (BWOW), or between 1.7% and 5.1% BWOW. This concentration range is higher than that which is commonly used in the art for the purpose of preventing foam formation (i.e., higher than about 0.5% BWOW). It will be shown in the examples to follow that adding polyethers to the mix water in the disclosed concentration range, prior to the addition of a hydratable clay, improves fluid mixability and the rheological properties of the fluid.

For each aspect, the ether modified silicone may be present in the composition at a concentration between 0.25% and 11% BWOW, or between 0.5% and 9.3% BWOW, or between 2% and 7.3% BWOW. Such ether modified silicones may be prepared by copolymerizing a polyether and a silicone oil. The functionalized silicones may have a linear structure 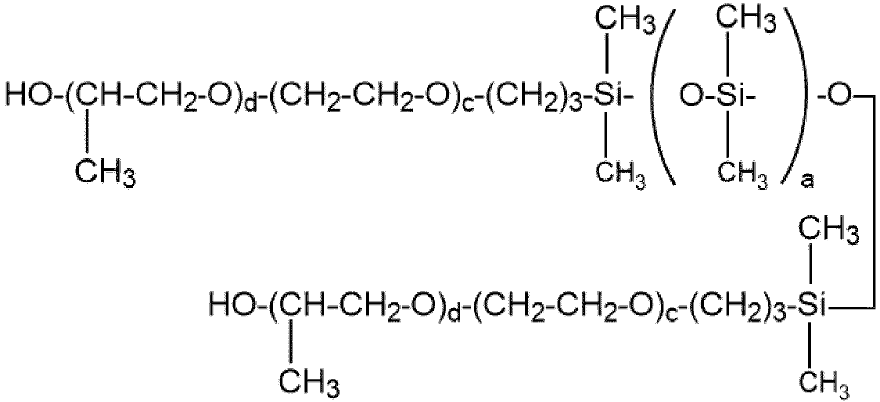 or a branched structure

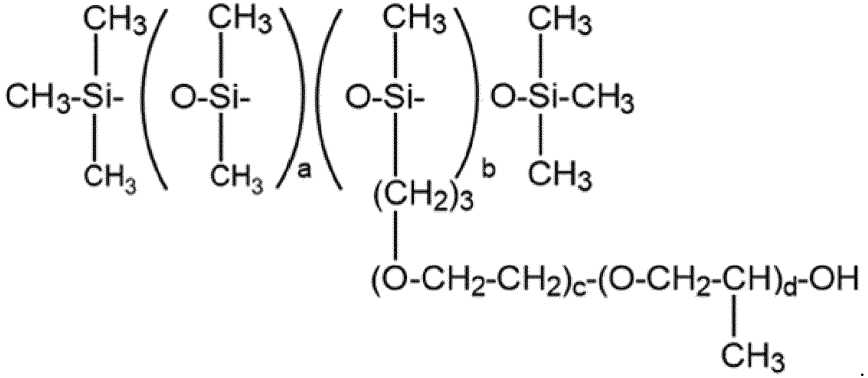

The ether groups may be characterized as a group (OC₃H₆)_{b}(OC₂H₄)ₐO(CH₂)_{c}, wherein a has a mean value between 0 and 16, b has a mean value between 0 and 12 and c is a number between 1 and 6, provided that a + b ≥ 1. The group may be grafted on the silicone backbone chain or used as mono- or di-terminal groups.

These products are prepared by several manufacturers employing proprietary processes. Selected commercially available ether modified silicones include Agochem™ AF 520 and Agochem™ AF540 (available from CHT Bezema, Tübingen,

Germany), Moussex™ 8044 (available from Synthron, Levallois-Paris, France) and AF8014 (available from Dow Corning, Midland, MI, USA).

For the aspects pertaining to cement slurries, the cement slurries may further contain accelerators, retarders, dispersants, fluid-loss additives, other types of extenders (e.g., sodium silicates, fly ashes and silicas), weighting agents, lost-circulation materials, gas-generating agents, surfactants and gas migration control additives.

For each aspect, the compositions may be pumpable. The viscosity of the compositions may be lower than 1000 cP at a shear rate of 100 s⁻¹.

As will be shown in the examples, the presence of the disclosed ether based additives within the disclosed concentration ranges results in improved fluid mixability and rheological properties. Improved fluid mixability may be characterized by any fluid viscosity reduction during and immediately after mixing at ambient temperature, compared to a control fluid that does not contain an ether based additive. The magnitude of the fluid viscosity reduction may also be between 1% and 80% compared to the control fluid, or between 10% and 50% compared to the control fluid. In the case of cement slurries, improved mixability may be further characterized by any reduction in the time required to add the solid ingredients to the mix water and form a homogeneous slurry, compared to a control slurry that does not contain an ether based additive. The magnitude of the addition time reduction may also be between 1% and 80% compared to the control slurry, or between 10% and 50% compared to the control slurry. Improved rheological properties may be characterized by higher fluid viscosities after fluid conditioning at temperatures higher than ambient temperature, compared to a control fluid that does not contain an ether based additive. The magnitude of the viscosity increase may be between 1% and 80% compared to the control fluid, or between 10% and 50% compared to the control fluid. In the case of cement slurries, improved rheological properties may be further characterized by the formation of stable slurries. In other words, little to no solids segregation occurs when the slurry is at rest. Any reduction in the density gradient between the top and bottom of a cement slurry column, compared to that of a control slurry, is considered to be a positive result.

The foregoing is further illustrated by reference to the following examples, which are presented for purposes of illustration and are not intended to limit the scope of the present disclosure.

### EXAMPLES

The following examples serve to further illustrate the disclosure.

### EXAMPLE 1

The following example illustrates the effect of polypropylene glycol (PPG) on the dispersion, hydration and rheological properties of a fluid containing untreated Wyoming bentonite in water. The untreated bentonite had a yield point/plastic viscosity ratio higher than 1.5, as calculated following the procedure published by the American Petroleum Institute (API Specification 13A-Specification for Drilling Fluids Materials, 18th Edition, 2010). The average molecular weight of the PPG was 4,000 g/mol. A series of rheological measurements was performed at room temperature.

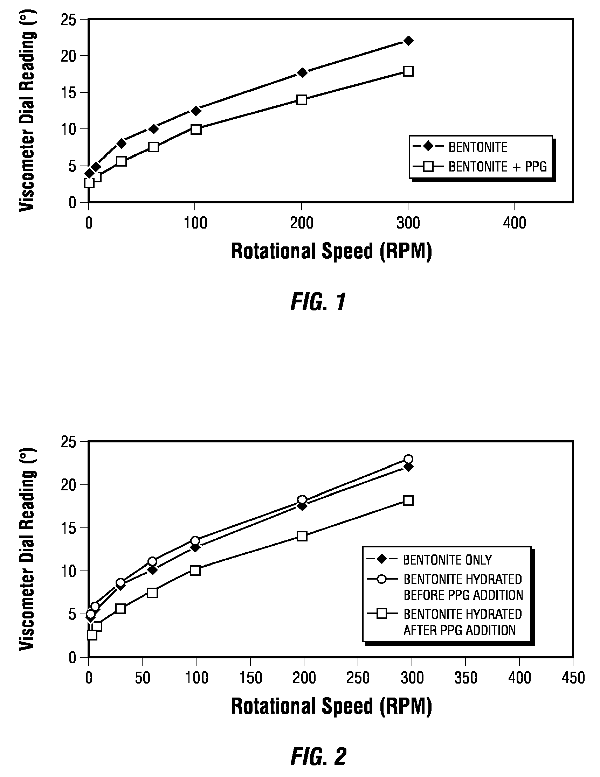

Test fluids were prepared that contained deionized water and 4% untreated bentonite by weight of water (BWOW). One comparative fluid did not contain PPG, and another fluid contained 0.5 wt% PPG. The fluids were prepared by adding the PPG to the water, followed by the bentonite, and mixing the fluids for 5 minutes in a Waring blender at 4,000 RPM. Rheological measurements were performed with a Chan 35 rotational viscometer (available from Chandler Engineering, Broken Arrow, OK, USA) fitted with the R1B1 rotor and bob configuration. The results, shown in Fig. 1, demonstrate that the presence of PPG affected the bentonite hydration, resulting in a lower viscosity. The plastic viscosity of the fluid containing PPG was 15% lower than the control fluid without PPG. The presence of PPG also improved fluid stability. After allowing the two fluids to remain static for 24 hours, the control fluid developed a layer of free fluid (i.e., clear fluid not containing bentonite), while the fluid containing PPG was a stable suspension.

Further rheological tests were performed to investigate the effect of prehydrating the bentonite. The bentonite was added to deionized water and mixed in the Waring blender at 4,000 RPM. The resulting suspension was then stirred for an additional 5 minutes in the Waring blender at 4,000 RPM, allowing the bentonite to fully hydrate and swell. The results, shown in Fig. 2, indicated that prehydrating the bentonite before adding the PPG essentially negated the beneficial effect. In other words, the viscosity of the prehydrated bentonite fluid was the same as that of the control fluid containing only bentonite. Without wishing to be held to any particular theory, Applicants believe that, when the PPG is present in the mix fluid before adding the bentonite, the PPG interferes with bentonite hydration. If the bentonite is already hydrated before the addition of PPG, it is too late to produce a beneficial effect.

### EXAMPLE 2

The following example demonstrates the effect of temperature on the rheological behavior of aqueous suspensions containing 6 wt% untreated Wyoming bentonite, with and without 0.5% BWOW PPG. The molecular weight of the PPG was 4,000 g/mol. The yield point/plastic viscosity ratio of the bentonite was 0.4. The fluids were prepared in the same manner as that described in Example 1-the PPG was added to the water before introducing the bentonite. Rheological tests using the Chan 35 viscometer were performed at room temperature, 60°C and 80°C.

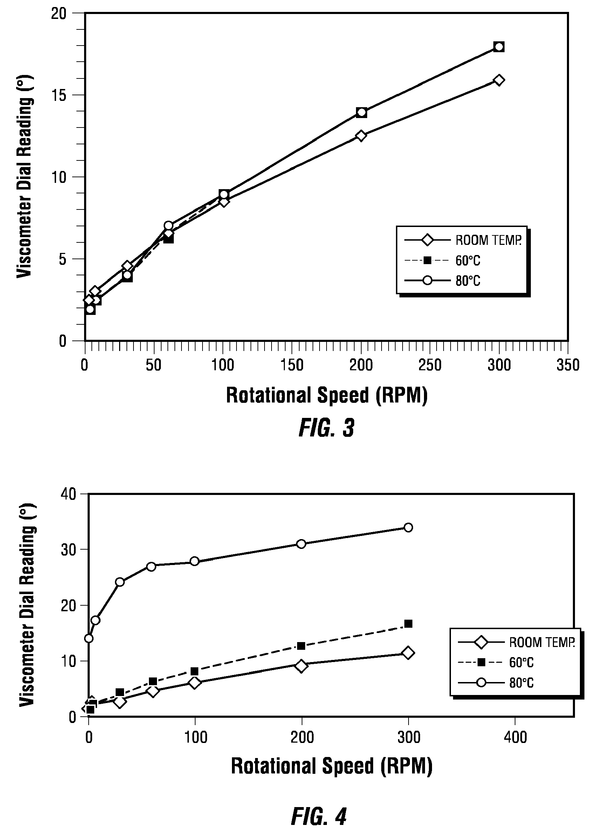

Temperature had minimal effect on the rheological properties of bentonite suspensions that did not contain PPG (Fig. 3). The fluid behavior in the presence of PPG was very different. A small viscosity increase occurred at 60°C and a much larger increase occurred at 80°C (Fig. 4).

### EXAMPLE 3

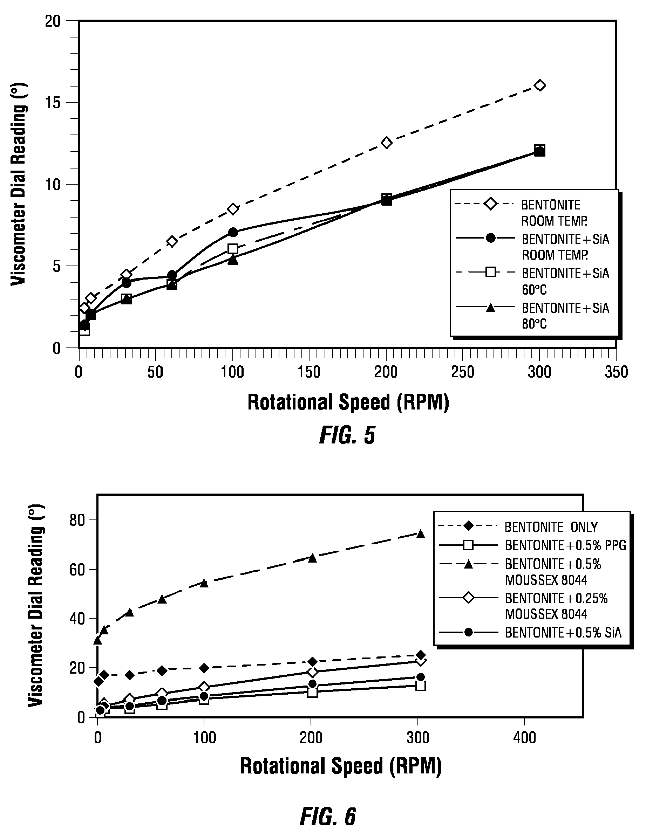

Experiments were performed to investigate the effect of an ether modified silicone on the dispersion, hydration and rheological properties of a fluid containing untreated Wyoming bentonite in water. Aqueous suspensions containing 6 wt% bentonite (yield point/plastic viscosity ratio = 0.4) were prepared with 0.25% BWOW and 0.5% BWOW Moussex™ 8044 (available from Synthron, Levallois-Paris, France). Another comparative fluid was prepared with 0.5% BWOW of an unmodified silicone antifoam (SiA). The bentonite was not prehydrated before adding the antifoams. Rheological measurements were performed at room temperature, 60°C and 80°C (Figs. 5, 6 and 7).

The presence of a conventional unmodified silicone antifoam had a small effect on the viscosity of the bentonite fluid at room temperature, but little effect was observed at the elevated temperatures (Fig. 5).

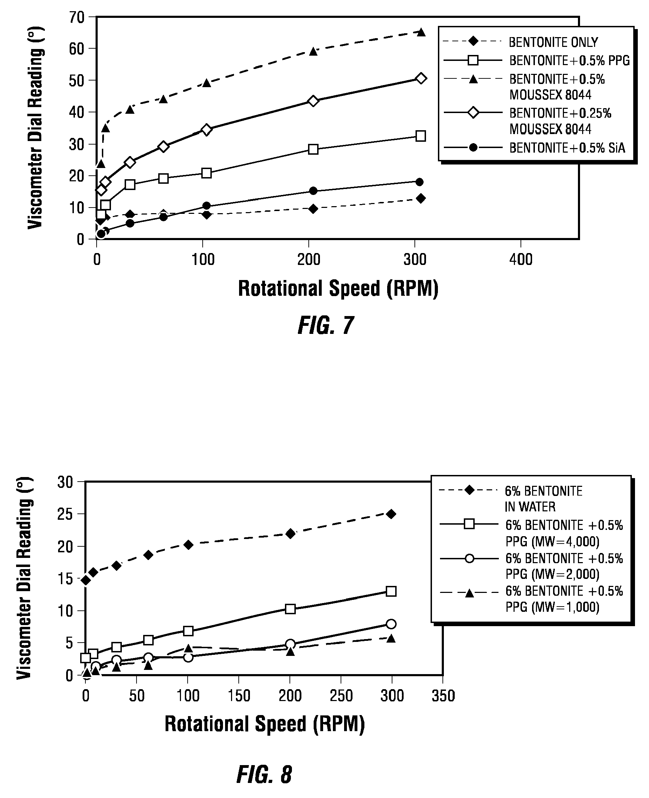

The behavior of the bentonite suspensions in the presence of Moussex™ 8044 was very different. At 0.25% BWOW and room temperature, the bentonite hydration was reduced as evidenced by the viscosity reduction of up to 75% (Fig. 6). However, when the Moussex™ 8044 concentration was increased to 0.5% BWOW, a viscosity increase took place. The behavior of a bentonite suspension without an antifoam agent, as well as suspensions containing an unmodified silicone antifoam and PPG, are also presented for comparison. At 80°C, a viscosity increase was observed at Moussex™ 8044 concentrations of both 0.25% BWOW and 0.5% BWOW (Fig. 7). The behaviors of a bentonite suspension without an antifoam agent, as well as a suspension containing an umodified silicone antifoam, are also presented for comparison.

### EXAMPLE 4

Experiments were conducted to investigate the effect of PPG molecular weight on the dispersion and hydration of untreated Wyoming bentonite (yield point/plastic viscosity ratio = 0.4) in deionized water. The bentonite concentration was 6% BWOW and the PPG concentration was 0.5% BWOW. Three average PPG molecular weights were tested: 1,000 g/mol, 2,000 g/mol and 4,000 g/mol. The PPG was added to the mix water before introducing the bentonite.

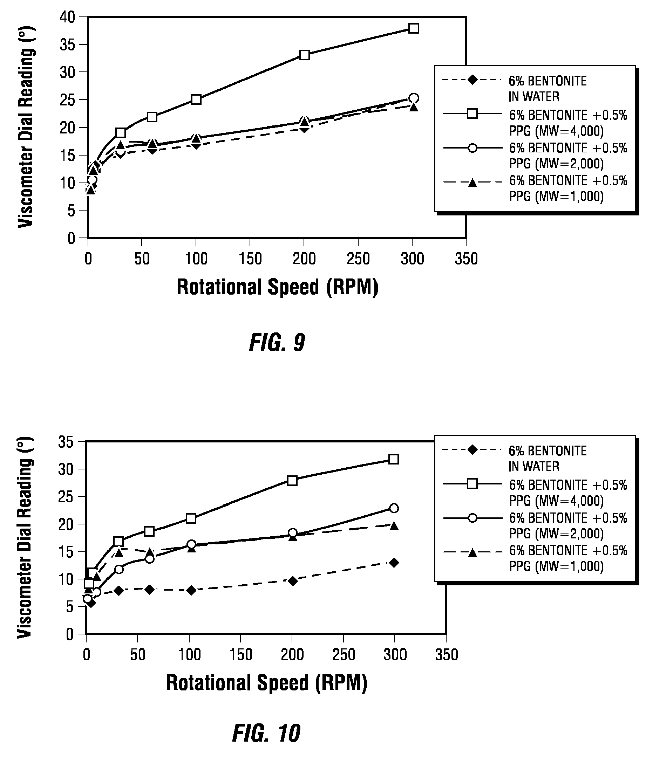

After mixing the suspensions for five minutes in a Waring blender at 4,000 RPM, a series of rheological measurements was conducted with a Chan 35 viscometer at room temperature, 60°C and 80°C. The results, presented in Figs. 8-10, showed that the PPG molecular weight had an effect on bentonite hydration. At room temperature, the presence of PPG reduced the fluid viscosity at each molecular weight, and the lowest viscosity was obtained with the 1,000 g/mol PPG (Fig. 8). 60°C, the fluid viscosity increased at each PPG molecular weight (Fig. 9). The highest viscosity was obtained with 4,000 g/mol PPG. At 80°C, the fluid viscosity also increased at each PPG molecular weight, 4,000 g/mol being the most efficient (Fig. 10). However, each of the fluid viscosities were lower than those obtained at 60°C.

### EXAMPLE 5

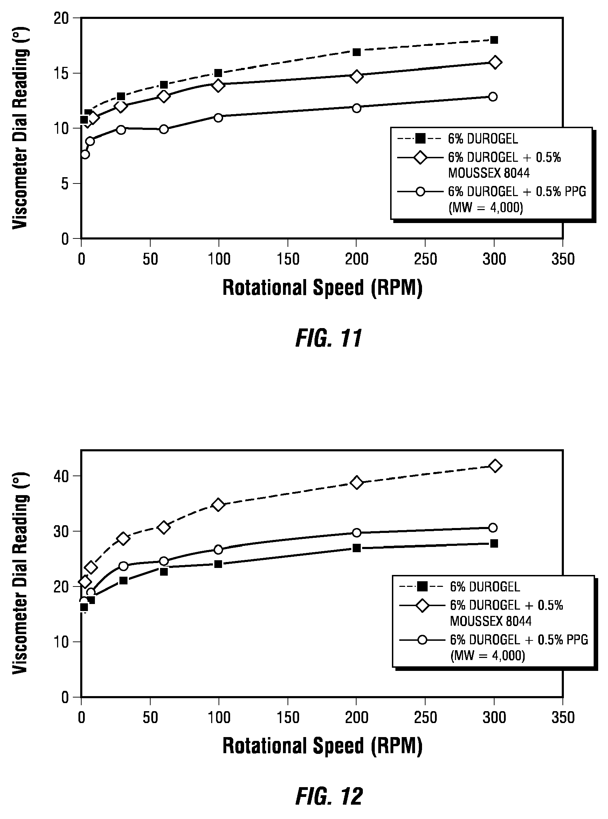

The effects of PPG and ether-modified silicone on the dispersion and hydration of sepiolite were investigated. Three suspensions were prepared that contained deionized water and 6% BWOW DUROGEL sepiolite (available from MI SWACO, Houston, TX). The first suspension was a control that did not contain an antifoam agent. The second and third suspensions contained 0.5% BWOW PPG (MW = 4,000 g/mol) and 0.5% BWOW Moussex™ 8044, respectively. A series of rheological measurements was performed at room temperature, 60°C and 80°C, using the same procedure described in previous examples. The results, presented in Figs. 11-13, are similar to those obtained with bentonite. At room temperatures both antifoam agents lowered the viscosity of sepiolite suspensions; however, at 60°C and 80°C, a viscosity increase was observed.

### EXAMPLE 6

Previous examples have described the behavior of unmodified bentonite or sepiolite. For this example, experiments were performed with an ether-modified bentonite-Agocel™ M610, available from CHT-Bezema, Tübingen, Germany.

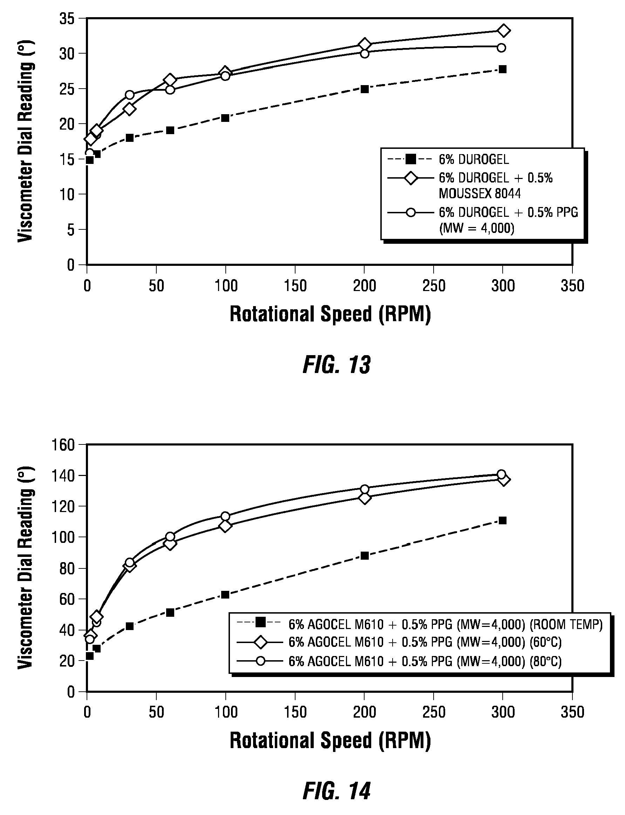

Suspensions were prepared that contained deionized water, 6% Agocel™ M610 BWOW and 0.5% BWOW PPG (MW = 4,000 g/mol). Rheological measurements were performed at room temperature, 60° and 80°C using the same procedure described in previous examples. The results, presented in Fig. 14, show that, compared to room temperature, the presence of PPG increased the viscosity of the suspensions. Due to severe foaming, it was not possible to measure the rheological properties of a control suspension without PPG.

### EXAMPLE 7

Cement slurries containing bentonite were prepared according to the designs shown in Table 1. A comparative slurry contained an unmodified silicone antifoam agent (referred to below as "Comparative Slurry"). A test slurry contained Moussex™ 8044 ether modified silicone (referred to below as "Test Slurry"). The slurries were prepared in a Waring blender according to the recommended procedure published by the American Petroleum Institute (API RP 10B2: Recommended Practice for Testing Well Cements, 2013). The hydrophobic particles were ground rubber with a density of 0.9 g/cm³ and an average diameter of several hundred micrometers. The fine particles were a 50/50 by weight blend of silica and Mn₃O₄. The particles in the blend were smaller than 10 micrometers. The dispersant was polynaphthalene sulfonate. The retarder was a lignosulfonate.

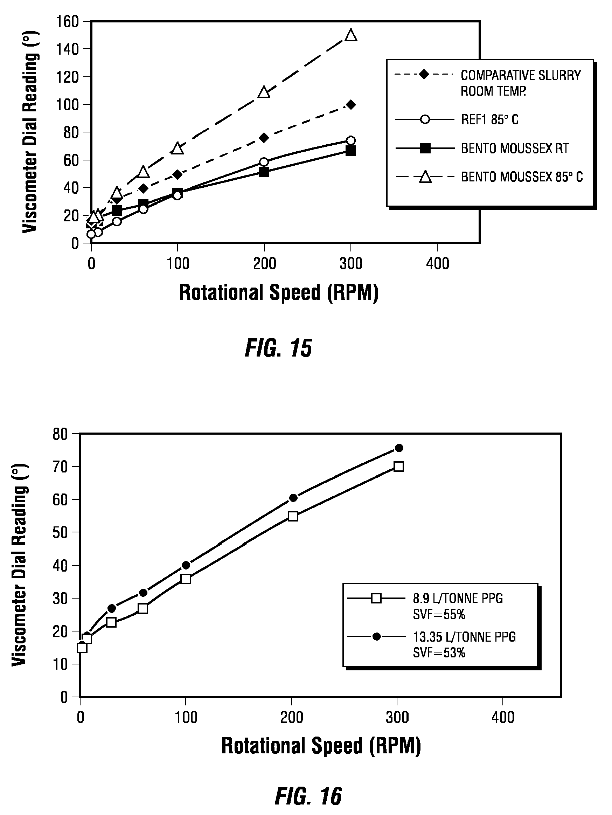

For both cement slurry designs the bentonite was added to the mix water after adding the silicone additive and agitated in a Waring blender for five minutes at 4,000 RPM. The cement and the remaining solid additives were then added and the slurry was mixed for 35 seconds at 12,000 RPM according to the API procedure. The time necessary to prepare the cement slurry (i.e., the time required to add the solid blend to the mixing fluid and observe a fluid vortex in the blender) was measured. Following slurry preparation, rheological properties of the slurries were measured at room temperature and at 85°C with a Chan 35 rotational viscometer. The blend addition times are shown in Table 1 and the rheological data are presented in Fig. 15. The blend addition time of the slurry containing Moussex™ 8044 was shorter than the comparative slurry. Without wishing to be held to any particular theory, the time difference may have been due to the Moussex™ 8044 being more effective at reducing foaming and air entrainment. Moussex™ 8044 may also inhibit bentonite hydration as it interacts with the clay surface.

**Table 1. Cement slurry designs and blend addition times. * by volume of blend; ** by weight of blend; *** by weight of cement**

| **Design** | **Comparative Slurry (Bentonite + Unmodified Silicone)** | **Test Slurry (Bentonite + Moussex™ 8044)** |
|---|---|---|
| **Slurry Density (kg/m³)** | 1,730 | |
| **Solid Volume Fraction (%)** | 53 | |

| **Solid Blend (%BVOB*)** | | |
|---|---|---|
| **Dyckerhoff Class G cement** | 36 | |
| **Hydrophobic particles** | 44 | |
| **Fine particles** | 20 | |

| **Mixing fluid (%BWOB**)** | | |
|---|---|---|
| **Unmodified Silicone Antifoam** (L/tonne) | 4.45 | - |
| **Retarder** (L/tonne) | 15.1 | |
| **Gas migration additive latex** (L/tonne) | 125 | |
| **Moussex 8044** (L/tonne) | - | 17.8 |
| **Bentonite (%BWOC***)** | 1 | |
| **Blend Addition time (s)** | 170 | 79 |

The rheological behavior of the two designs was also different. At room temperature, the plastic viscosity of the Test Slurry was lower than that of the Comparative Slurry (109 Pa-s versus 170 Pa-s); however, the yield points of both slurries were similar (≈11 Pa). At 85°C, however, the behavior was different. The plastic viscosity and yield point of the Comparative Slurry were 140 Pa-s and 6 Pa, while the values for the Test Slurry were 272 Pa-s and 13 Pa. As a result, the stability of the Test Slurry was better. Particle migration was minimal when the Test Slurry was allowed to rest at 85°C. Using the slurry stability test method published in the API RP 10B2 reference, the density difference observed between the top and the bottom of slurry was 72 kg/m³. In the Comparative Slurry the hydrophobic particles separated and floated to the top of the column; as a result, it was impossible to perform a density measurement at the top.

### EXAMPLE 8

This example demonstrates the effect of an ether modified silicone on the rheological properties of bentonitic cement slurries. The base cement slurry composition is given in Table 2. The hydrophobic particles were acrylonitrile-butadiene rubber. The gas migration additive latex was styrene-butadiene latex. The retarder was a lignosulfonate.

**Table 2. Cement slurry design. * by volume of blend; ** by weight of blend**

| | |
|---|---|
| **Slurry Density (kg/m³)** | 1730 |
| **Solid Volume Fraction (%)** | 53 |

| **Blend (%BVOB*)** | |
|---|---|
| **Dyckerhoff Class G cement** | 36% |
| **Hydrophobic particles** | 44% |
| **Fine particles (blend of silica and Mn₃O₄)** | 20% |

| **Mixing fluid (%BWOB**)** | |
|---|---|
| **Bentonite** | 1.0 |
| **Retarder** (L/tonne) | 15.1 |
| **Gas migration additive latex** (L/tonne) | 125 |

Rheological tests were performed with a Chan 35 rotational viscometer at room temperature and after 30 minutes of conditioning in an atmospheric consistometer at 85°C. The results (Table 3) indicated that, compared to the control slurry containing an unmodified silicone antifoam agent, the presence of the ether modified silicone, Moussex™ 8044, lowered both the plastic viscosity and yield stress of the cement slurry at room temperature. Conversely, at 85°C, the plastic viscosity and yield stress were higher.

**Table 3. Rheological measurements of cement slurries containing antifoam agents.**

| **Additive** | **Concentration (L/tonne)** | **Concentration (% BWOW)** | **Plastic Viscosity (Pa*s)** | | **Yield Stress (Pa)** | |
|---|---|---|---|---|---|---|
| | | | **RT** | **85°C** | **RT** | **85°C** |
| Unmodified Silicone antifoam | 4.45 | 1.1 | 170 | 145 | 12 | 6 |
| Moussex™ 8044 | 17.8 | 7.3 | 109 | 272 | 10 | 13 |
| Moussex™ 8044 | 22.3 | 9.3 | 131 | 237 | 11 | 8 |

### EXAMPLE 9

This example demonstrates the effect of various concentrations of PPG (MW = 4,000 g/mol) on the mixability and rheological properties of cement slurries containing untreated Wyoming bentonite. The base slurry composition was the same as that given in Table 2 (Example 8), with the exception that the bentonite concentration was 0.5% BWOB in certain cases.

Mixing tests were conducted in a Waring blender as described in Example 7. The results (Table 4) indicated that, compared to the control slurry that contained an unmodified silicone antifoam agent, and depending on the bentonite concentration, a reduction in the blend addition time could be achieved at PPG concentrations between about 4.45 L/tonne and 26.7 L/tonne.

**Table 4. Blend mixing times of bentonitic cement slurries containing antifoam agents at various concentrations.**

| **Additive** | | **Concentration (L/tonne)** | **% BWOW** | **SVF** | **Blend addition time (s)** |
|---|---|---|---|---|---|
| | Unmodified Silicone Antifoam | 4.45 | 1.7 | | 170 |
| | | 4.45 | 1.7 | | 101 |
| Bentonite 1% BWOB | | 8.90 | 3.4 | 53% | 84 |
| | PPG | 13.35 | 5.1 | | 95 |
| | | 26.7 | 10.2 | | >180 |
| | | 4.45 | 1.9 | 55% | 158 |
| | | 8.90 | 3.8 | | 160 |
| Bentonite 0.5% BWOB | PPG | 8.90 | 3.4 | 53% | 70 |
| | | 17.8 | 6.8 | | 109 |
| | | 26.7 | 10.2 | | 119 |

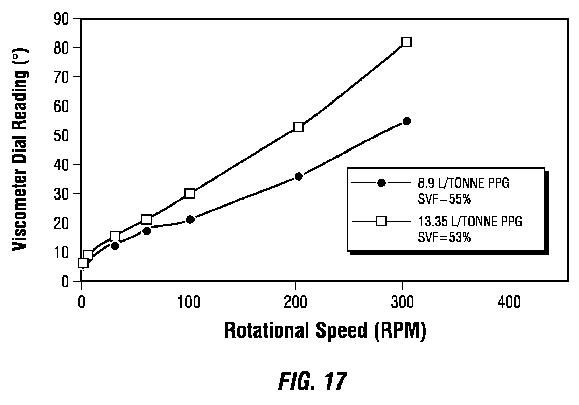

Viscometer readings at room temperature and 85°C for slurries containing 4.45 L/tonne and 13.4 L/tonne PPG are shown in Fig. 16. At room temperature a higher concentration of PPG reduced the slurry viscosity. The opposite occurred at 85°C (Fig. 17).

Although a few example embodiments have been described in detail above, those skilled in the art will readily appreciate that many modifications are possible in the example embodiments without materially departing from this disclosure. Accordingly, each such modification is intended to be included within the scope of this disclosure as defined in the following claims.

## Claims

1. A composition, comprising:
(i) water;
(ii) a hydratable clay mineral; and
(iii) an ether-based additive.

2. The composition of claim 1, wherein the ether-based additive comprises a polyether, or an ether-modified silicone or a combinations thereof.

3. The composition of claim 2, wherein the polyether is polypropylene glycol.

4. The composition of claim 3, wherein the polypropylene glycol has an average molecular weight between 1,000 g/mol and 4,000 g/mol.

5. The composition of claim 3, wherein the polypropylene glycol is present at a concentration between 1.7% and 10.2% by weight of the water.

6. The composition of claim 2, wherein the ether-modified silicone is present at a concentration between 1% and 11% by weight of the water.

7. The composition of any one of claims 1-6, further comprising portland cement.

8. The composition of any one of claims 1-7, wherein the hydratable clay mineral comprises untreated bentonite, ether modified bentonite, hectorite or sepiolite or combinations thereof.

9. A method for cementing a subterranean well, comprising:
(i) preparing a composition comprising water, portland cement, a hydratable clay mineral and an ether-based additive; and
(ii) placing the composition in the well;
wherein, as the composition is prepared, the ether-based additive is combined with the water before introducing the hydratable clay.

10. The method of claim 9, wherein the ether-based additive comprises a polyether, or an ether-modified silicone, or a combination thereof.

11. The method of claim 10, wherein the polyether is polypropylene glycol.

12. The method of claim 11, wherein the polypropylene glycol has an average molecular weight between 1,000 g/mol and 4,000 g/mol.

13. The method of claim 11, wherein the polypropylene glycol is present at a concentration between 1.7% and 10.2% by weight of the water.

14. The method of claim 10, wherein the ether-modified silicone is present at a concentration between 1% and 11% by weight of the water.

15. The method of claim 9, wherein the hydratable clay mineral comprises untreated bentonite, ether modified bentonite, hectorite or sepiolite or combinations thereof.
